**Europäisches Patentamt**

**European Patent Office**

**Office européen des brevets**

(19)

(11) **EP 1 168 666 A2**

(12) **EUROPEAN PATENT APPLICATION**

(43) Date of publication:
**02.01.2002 Bulletin 2002/01**

(51) Int Cl.$^7$: **H04B 7/185**

(21) Application number: **01113504.3**

(22) Date of filing: **11.06.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **19.06.2000 US 596671**

(71) Applicant: **TRW Inc.**
**Redondo Beach, California 90278 (US)**

(72) Inventors:
• **Wright, David A.**
**Hermosa Beach, CA 90254 (US)**

• **Jue, Reginald**
**Manhattan Beach, CA 90266 (US)**
• **Nivens, Dennis A.**
**Hermosa Beach, CA 90254 (US)**
• **Carrozza, Dominic P.**
**Redondo Beach, CA 90278 (US)**

(74) Representative: **Schmidt, Steffen J., Dipl.-Ing.**
**Wuesthoff & Wuesthoff, Patent- und Rechtsanwälte, Schweigerstrasse 2**
**81541 München (DE)**

(54) **Method and system for controlling uplink power in a satellite communication system using power leveling**

(57) A method and system for controlling uplink power in a satellite communication system (100) using power leveling is provided. Uplink signals, such as synchronization bursts, are periodically transmitted from a User Earth Terminal (UET) (110) to a processing satellite (140, 350). The total energy of the received uplink signal is determined at the satellite (350) and then compared to a predetermined threshold energy, and a power adjustment indicator is generated. The power adjustment indicator is then transmitted to the UET (310). The UET (310) then controls its uplink transmit power level based on the power adjustment indicator. For example, if the power adjustment indicator indicates that the received uplink energy at the satellite (350) is less than the predetermined threshold, the UET (310) may raise its uplink power. The uplink signal may be a synchronization signal and the total energy of the uplink signal may be determined by a synchronization processor. Additionally, the power adjustment indicator may be a one-bit indicator or a plurality-bit indicator and may be packaged into ATM cells (500) for transmission from the satellite (350) to the terminal (310). The power level of the uplink signal may be adjusted upwards or downwards in increments of varying sizes, or the power level may simply be maintained based upon the magnitude of difference between the total energy of the uplink signal and the predetermined threshold.

FIG. 1

EP 1 168 666 A2

**Description**

BACKGROUND OF THE INVENTION

The present invention generally relates to satellite communication systems. In particular, the present invention relates to controlling the uplink power in a satellite communication system.

Satellites have long been used to provide communication services to large regions of the globe. Historically, communication satellites have used frequencies in the range - of 3 to 12 GHz (C or Ku band) to produce an antenna beam which covers a large portion of a continent. Modern satellites may operate at frequencies of 20 to 30 GHz (Ka band) to produce a beam which may cover an area (or "cell") with a diameter of 300 to 400 miles. Many such cells may be needed to provide communications to a region which previously may have been serviced by a single antenna beam. A modern cellular communication satellite may employ many antennas to generate a large number of beams used for transmitting downlink signals to, and receiving uplink signals from, various User Earth Terminals (UET) distributed over the surface of the earth.

In order for communication to occur on the uplink, signals generated by the UET must be of sufficient power to be received by the satellite. Thus, the antenna gain of the satellite's uplink antenna coupled with the transmission power of the UETs must be sufficient to allow communication to occur. Typically, communication satellite systems are designed with a predetermined, fixed satellite uplink antenna gain. Thus, the transmission power of the UET is typically controlled to enable and ensure communication.

In practice, several factors exists which may negatively impact the uplink communication channel. That is, certain undesired influences may cause the actual antenna gain to vary from the predetermined, designed antenna gain or may cause attenuation of, or interference with, a signal transmitted by a UET. For example, antenna gain may be affected by gain roll-off which may cause the antenna gain to vary spatially over the cell or, alternatively, antenna gain may vary over the cell as a result of pointing errors in the antenna. Atmospheric attenuation, also known as "rain loss," or interference among several UETs, also known as Co-Channel Interference (CCI), may also affect the quality of a signal transmitted from a UET. Each of these conditions, gain roll-off, antenna pointing errors, atmospheric attenuation, and CCI is further discussed below.

1) Gain Roll-Off

The pattern of cells on the surface of the earth is known as the cellular pattern of the satellite communication system. The cellular pattern in a modern satellite communication system may be defined on the surface of the earth such that the maximum gain of a satellite antenna beam is directed toward the center of its assigned cell. The boresight of a satellite antenna beam may be defined as the maximum gain point in the satellite antenna beam, and is typically directed to the center of a cell. The edge of a cell may be defined by determining the angular deviation from the antenna boresight at which the gain of the antenna beam drops to a predetermined value below the maximum gain value, typically at least 3 dB below the maximum gain value. The decrease in antenna beam gain with increasing angular deviation from boresight is known as gain roll-off. In terms of uplink power, a communications signal which is transmitted to the satellite from a UET located at the edge of a cell may be received by the satellite antenna with a gain which is at least 3 dB lower than the gain of a signal which is transmitted from a UET located at the antenna boresight, or center of the cell. Thus, the transmission power level of a terminal located at the edge of a cell must be at least 3 dB higher than that of a terminal located at the center of a cell in order to achieve the same level of performance. In other words, if the edge of a cell is defined as the angle from boresight at which the satellite antenna gain has decayed to 3dB below the maximum antenna gain at the boresight, a UET at the edge of the cell may need to use a transmission power level 3dB higher than a UET at the center of the cell in order to compensate for the reduced antenna gain at the edge of the cell. By transmitting at the 3dB higher transmission power level, the signal from the UET at the edge of the cell may be received at the satellite with a power that is approximately equal to the power of a signal from the UET at the center of the cell. In order to simplify and reduce the cost of uplink components installed on the satellite, it is desirable to maintain a similar received power level for each UET in the cell. Thus, it is desirable to modify the transmission power of each UET in the cell to compensate for any reduction in the antenna gain at each UET resulting from the UET's position within the cell.

2) Antenna Pointing Errors

In practice, the antenna beams of a cellular communication satellite are generally not directed precisely toward the centers of their assigned cells. Slight mis-orientations of the antenna boresights and deviations from a perfectly circular, zero-inclination satellite orbit give rise to pointing errors. These pointing errors may cause the location of the maximum gain of an antenna beam to deviate from the cell center. Some pointing errors may also cause the maximum gain of an antenna beam pattern to change measurably over the course of a day. In other words, the antenna beam gain distribution across the cell may change with time.

The antenna beam gain at the edge of a cell typically rolls off rapidly as the distance from the center of the cell increases; that is, as the angular deviation from boresight increases. Thus, a pointing error corresponding to only 10% of a cell diameter may cause the antenna beam gain at the edge of a cell to vary by 2 dB or more. Because it is desirable to maintain a similar received power for each UET in the cell, it is desirable to adjust the transmission power of each UET in the cell to compensate for antenna beam pointing errors.

3) Atmospheric Attenuation

Achieving satisfactory communication performance for a signal transmitted from a UET to a satellite generally depends upon receiving a requisite level of signal power at the satellite. That is, each user terminal must transmit a signal with sufficient power to be received. The relationship between the power of the signal transmitted by the terminal and the power of the signal received by the satellite receiver depends in part upon the amount of attenuation of the signal as it passes through the earth's atmosphere. At Ka-band frequencies, the amount of atmospheric attenuation varies considerably as meteorological parameters and weather patterns change. In particular, the occurrence of rain has a pronounced effect on the attenuation of a Ka-band communication signal. The attenuation of the communication signal is known as rain loss or rain fade, although other meteorological phenomena may also provide attenuation. Such atmospheric conditions and/or weather patterns may change rapidly and may vary among different UETs in a cell depending upon the UET's position within the cell. Because it is desirable to maintain a similar received power for each UET in the cell, it is desirable to adjust the transmission power of each UET in the cell to compensate for the attenuation experienced by the UET's signal due to rain loss.

4) Co-Channel Interference

Immediately adjacent cells in a cellular satellite communication system typically use different frequencies for transmitting signals. However, non-adjacent cells may use the same frequency. Such frequency re-use among cells within a cellular pattern serves to reduce the overall frequency bandwidth necessary for the satellite communication system. However, imperfections in satellite antenna beams such as, for example, sidelobe generation, may cause signals transmitted from a UET located in a first cell to be received by a satellite antenna beam which is assigned to receive signals from UETs located in a second cell which uses the same frequency as the first cell. Signals transmitted by UETs located in different cells but using the same frequency may thus interfere with each other, and may cause degraded communication performance. That is, a desired signal received by the satellite from a first UET may be interfered-with by signals from other UETs in other cells using the same frequency as the first UET. The interference from the other UETs may interfere with the desired signal and may adversely affect the performance of the communication system. The interference from other UETs is often referred to at Co-Channel Interference (CCI).

The ratio of the signal power received from the desired UET to the background noise is known as the signal-to-background ratio (SBR). The number of errors in a data signal received from a UET at a satellite (i.e., error count) may be impacted by the SBR. The background may include thermal and other noise sources as well as interference sources such as interference from other UETs using the same frequency. In order for the satellite to receive a signal from a particular UET, the transmission power of the UET must be sufficient to provide at least a certain desired minimum SBR. As the background portion of the SBR increases with increasing CCI, the signal portion of the SBR is also increased to maintain the desired SBR. That is, the UET of interest transmits with increased transmission power to maintain the desired SBR in light of the increasing interference from other UETs. However, increasing the transmission power of the UET of interest raises the background level for the other UETs. The other UETs, also seeking to maintain the desired SBR, in turn respond by raising their transmission powers. The UET of interest may react by further increasing its power, and so on until all terminals in the system are operating at the maximum transmission power. This phenomenon is known as system runaway.

Satellite systems have been proposed that attempt to address the problem of system runaway by establishing a single, constant transmission power level for each UET. These proposed systems contemplated using frequencies in the range of 3 to 12 GHz (C or Ku band). Maintaining a constant power for each UET may be acceptable at Ku or C band frequencies in some cases. However, at higher, Ka-band frequencies (20-30 GHz), for example, attenuation alone may cause the power of the received signals at the satellite to vary over a range of 20 dB or more. A comparable dynamic range would be required of the satellite demodulator, which would have a dramatic impact on system complexity and cost. Additionally, such a system would produce a high degree of CCI and increased power consumption. Because of the high CCI, the maximum tolerable interference level from other UETs would unduly limit the number of UETs that may be used, and system capacity would be needlessly limited. Therefore, it is desirable to maintain satisfactory communication performance (typically, maintain a desired SBR and/or a desired error count) while preventing system runaway.

Additional complexity arises in an uplink power control system with regard to UETs which transmit data intermittently rather than continuously, or whenever a UET first establishes a communication channel for transmission to the satellite. When a UET initiates a transmission, the UET may be forced to send an uplink signal into an attenuation and interference environment substantially unknown to the UET. That is, the UET may not be able to transmit initially with a transmission power that provides the desired SBR while not providing needless CCI to other UETs using the same frequency. If the initial transmission power is set too low, the signal may not be received by the satellite. If the initial transmission power is set too high, it may add a disproportionate amount of CCI and degrade the quality (adversely impact the SBR) of other uplink signals in the system.

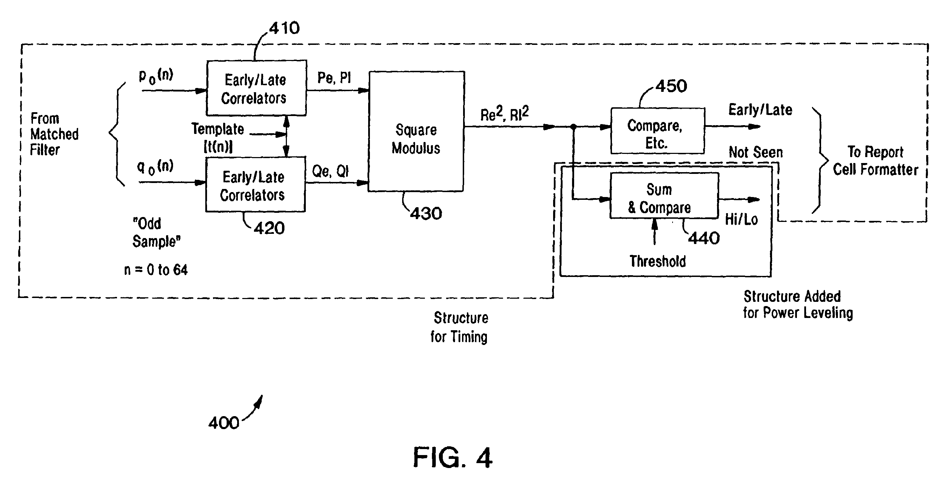

U.S. Patent No. 4,910,792, entitled "Up-link Power Control in Satellite Communications System" ( the '792 patent) illustrates one approach for controlling uplink transmission power to compensate for rain attenuation. The '792 patent illustrates a system including a number of user stations 59, a reference earth station 58, and a satellite 50, identified at column 1, lines 41-43, which is "a mere repeater of signals, but has no facility to measure the power transmitted from each earth station." In operation, the transmission power of a reference signal transmitted from the reference earth station 58 is adjusted so that the received reference signal at the satellite is constant. Each user station 59 transmits a signal which is relayed to the satellite and back to the user station 59. Each of the earth stations 59 then detects the difference between the received reference signal from the reference earth station through the satellite and the level of the received signal with was sent from itself and relayed by the satellite. Each of the earth stations 59 then adjusts its uplink power based on the difference between the signals. That is, the '792 patent assumes that the reference burst 60 from the reference station 59 is received by the user station 59 with attenuation only on the downlink, while the burst 61 sent from the user station 59 is received at the user station 59 with the attenuation on both the uplink and downlink. Therefore, the difference between the received reference burst signal 60, and the user station burst 61 sent from the user station itself is the attenuation 62 in the uplink, as shown in Figure 4(b). The system of the '792 patent applies only to systems employing "bent-pipe" transponders, which are not present in a processing satellite communication system.

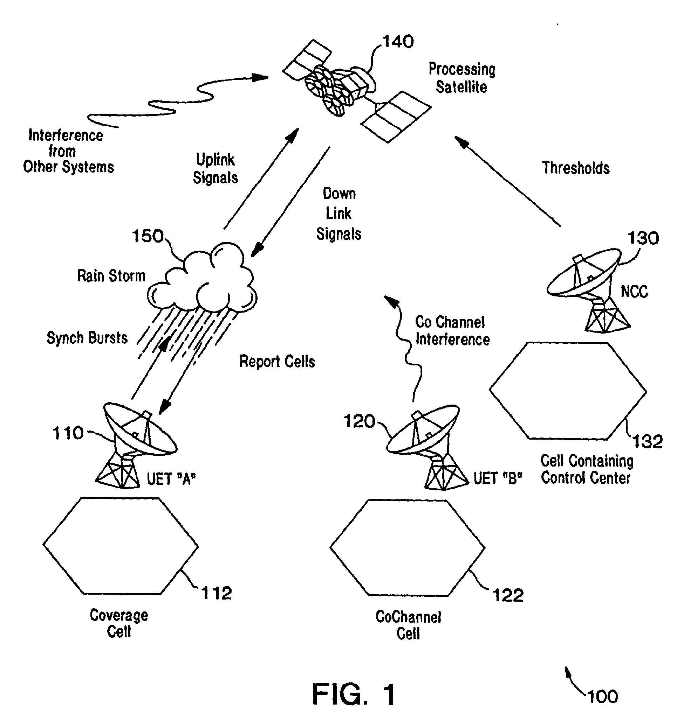

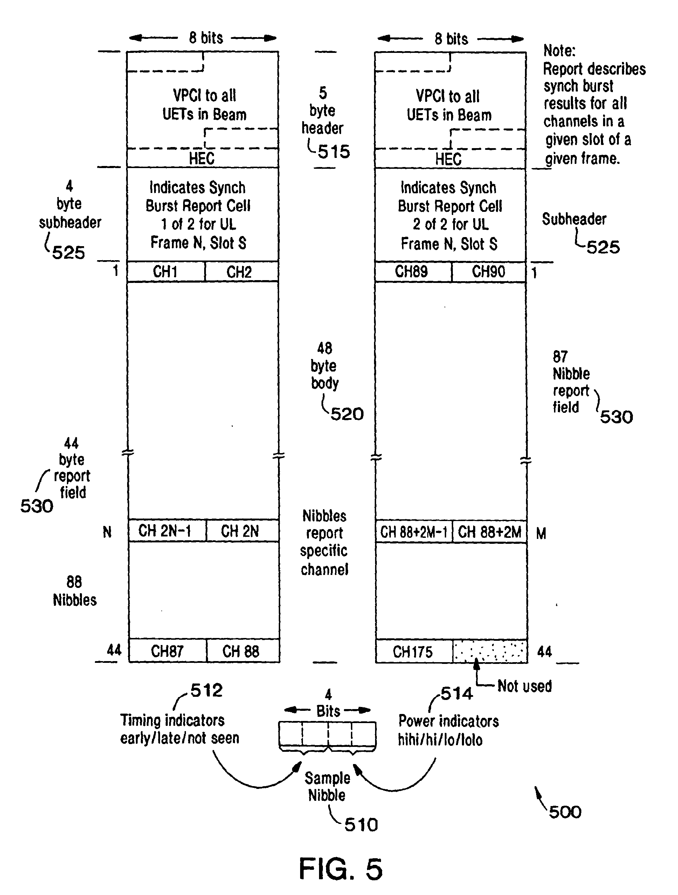

U.S. Patent No. 5,864,547, entitled " Method and System for Controlling Uplink Power in a High Data Rate Satellite Communication System Employing On-Board Demodulation and Remodulation " (the '547 patent) illustrates another approach for controlling uplink transmission power. In operation, as shown in Figures 1 and 5, a downlink error rate of the data in a downlink data stream is determined based on known data bits transmitted by a satellite and received by a receiving terminal 12. An end-to-end error rate of the uplink data stream and the downlink data stream is then determined based on the number of errors in received data transmitted by a first user terminal 11 to the receiving terminal 12. The error rate of the uplink is then indirectly estimated based on the downlink error rate and the end-to-end error rate with reference to a lookup table. Finally, the power of the uplink is controlled based on the indirect estimate of error rate of the uplink. Thus, the '547 patent relies on an indirect estimate of uplink signal quality using downlink signals. Therefore, errors introduced in the downlink may not reliably be separable from errors introduced in the uplink. The '547 patent does not determine the uplink error rate directly.

Thus, a need has long existed for a system and method for controlling the uplink power in a satellite communication system. A need has especially existed for such a system and method able to control uplink power in an uplink channel affected by gain roll-off, antenna pointing errors, atmospheric attenuation, and CCI. Additionally, a need has long existed for such a system and method to control initial uplink transmission power. Finally, a need has long existed for a system able to measure an uplink power level or data error rate directly.

SUMMARY OF THE INVENTION

The preferred embodiment of the present invention provides a method and system for controlling uplink power in a satellite communication system using power leveling. The satellite communication system includes a User Earth Terminal (UET) transmitting an uplink signal, preferably a synchronization signal, to a satellite. The satellite receives the uplink signal and determines the total energy of the uplink signal, preferably using a synchronization processor. A power adjustment processor then generates a power adjustment indicator based on the comparison of the total energy level of the uplink signal to a predetermined threshold energy level. The power adjustment indicator is then transmitted from the satellite to the UET, which controls its uplink transmission power level based on the power adjustment indicator. For example, if the power adjustment indicator indicates that the received uplink energy level at the satellite is less than the predetermined threshold, the UET may raise its uplink transmission power. The power adjustment indicator may be a one-bit indicator or a plurality-bit indicator and may be packaged into ATM cells for transmission from the satellite to the terminal. The transmission power level of the uplink signal may be adjusted upwards or downwards in increments of varying sizes, or the power level may simply be maintained based upon the magnitude of difference between the total energy level of the uplink signal and the predetermined threshold.

The present invention may comprise an individual component of a comprehensive uplink power control system, such as that described in a co-pending application entitled "Comprehensive System and Method for Uplink Power Control in a Satellite Communication System," Serial No. _____, TRW 22-0107 _____, filed _____.

These and other features of the present invention are discussed or apparent in the following detailed description of the preferred embodiments of the invention.

BRIEF DESCRIPTION OF THE DRAWINGS

Figure 1 illustrates a cellular satellite communications system according to a preferred embodiment of the present invention.
Figure 2 illustrates a simplified block diagram according to a preferred embodiment of the present invention.
Figure 3 illustrates a power leveling system according to a preferred embodiment of the invention.
Figure 4 illustrates a selected power determination module of the synch burst processor according to a preferred embodiment of the present invention.
Figure 5 illustrates exemplary ATM report cells according to a preferred embodiment of the present invention.
Figure 6 illustrates a flow chart according to a preferred embodiment of the present invention.

DETAILED DESCRIPTION OF THE PREFERRED EMBODIMENTS

Figure 1 illustrates a cellular satellite communications system 100 in which a preferred embodiment of the present invention may be employed. The satellite system 100 includes a first User Earth Terminal (UET), UET A 110, a second UET, UET B 120, a Network Control Center (NCC) 130, and a processing satellite 140. Both the UET A 110 and the UET B 120 may be mobile, but are preferably fixed terminals. The NCC 130 is preferably a fixed terminal. The UET A 110 is positioned within a coverage cell 112, the UET B 120 is positioned within a Co-Channel cell 122, and the NCC 130 is positioned within a NCC cell 132.

The UET A 110 and the UET B 120 are preferably linked by, and communicate with each other via, the satellite 140. Both the coverage cell 112 and the Co-Channel cell 122 correspond to individual antenna beams of the satellite 140. Each individual antenna beam of the satellite 104 is preferably directed toward the center of the respective cell, and is assigned to receive signals originating from, and transmit signals directed to, all of the terminals located within that cell.

The satellite communication system preferably uses frequency division multiple access (FDMA) in combination with time division multiple access (TDMA) for allocating available communication resources, such that each terminal within a given cell is assigned a frequency channel and one or more time slots for transmission of uplink signals.

Terminals located in adjacent cells transmit uplink signals using different frequency channels, while terminals in nonadjacent cells may use the same frequency channels. For example, the UET A 110 may use the same frequency channel as the UET B 120 for transmitting uplink signals to the satellite 140. Each channel/slot combination ("chanslot") is assigned to only one terminal in a given cell for transmission of uplink signals, while each terminal may be assigned one or more chanslots. Alternatively, the present invention may be implemented in many other types of satellite communication systems which use code division multiple access (CDMA), FDMA only, TDMA only, or any other combination of CDMA, FDMA, and/or TDMA. A preferred embodiment of the present invention is described in detail below in the context of a TDMA/FDMA system.

In operation, the UET A 110, transmitting inside the coverage cell 112, sends uplink signals to the processing satellite 140 as shown. The uplink signals propagate through free space from the UET A 110 to the satellite 140. As mentioned above, the power of the uplink signals received at the satellite 140 from the UET A 110 may be negatively impacted by several factors including the UET A's 110 location within the coverage cell 112, the presence of an atmospheric event such as a rain storm 150, pointing errors in the orientation of the transmission antenna of the UET A 110 and receiving antenna of the satellite 140, and Co-Channel Interference (CCI) from UET B 120.

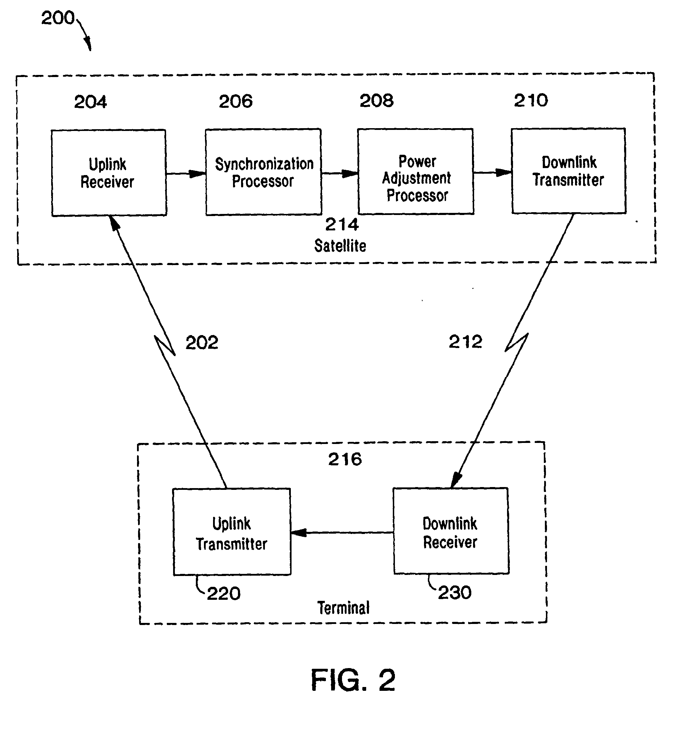

Figure 2 illustrates a simplified block diagram 200 of a preferred embodiment of the present invention. The block diagram 200 includes a UET 216 and a satellite 214. The UET 216 includes an uplink transmitter 220 and a downlink receiver 230. The satellite 214 includes an uplink receiver 204, a synchronization processor 206, a power adjustment processor 208 and a downlink transmitter 210.

In operation, the UET 216 periodically transmits a synchronization signal 202 to the satellite 214 via the uplink transmitter 220. The synchronization signal 202 is preferably composed of a predetermined sequence of binary digits and is typically used by the satellite 214 to estimate the timing error of the terminal 216. The synchronization signal 202 is received by the satellite 214 via the uplink receiver 204 and passed to the synchronization processor 206. The synchronization signal 202 and the synchronization processor 206 are further described in U.S. Patent application Ser.

No. _____TRW 205_____, filed_____, entitled "Synchronization Method for a Processing Satellite System", the contents of which are incorporated herein by reference.

As described further below, the preferred embodiment of the present invention modifies the synchronization processor 206 so that the received signal is correlated with the predetermined threshold sequence and the total energy level of the received correlated signal is measured. The measured total energy in general includes signal energy, interference, and thermal noise. When the synchronization sequence is of sufficient length (for example, a length of 64), then the contributions to total energy from interference and thermal noise are small compared with the contribution of the signal energy. Thus, the total energy of the correlated signal is approximately that of the signal energy.

The measured total energy value is input to a power adjustment processor 208, where it is compared with a predetermined threshold. The predetermined threshold represents the desired total energy level of the correlated signal, based on a desired communication performance level. The power adjustment processor 208 calculates the difference between the threshold and the measured total energy and determines a power adjustment value. The power adjustment value is then sent from the satellite 214 to the UET 216 via the downlink transmitter 210. The UET 216 receives the downlink signal 212 via the downlink receiver 230. The UET 216 then uses the power adjustment value to adjust the transmission power level of the uplink transmitter 220.

In a first embodiment, the power adjustment value is the numerical value of the difference between the threshold level and the measured total energy. However, such a numerical value may require several bits to implement and thus may require transmission bandwidth that could otherwise be used for data.

In a second embodiment of the present invention, the power adjustment processor 208 located within the satellite 214 determines only whether the measured total energy is greater or less than the desired threshold, rather than the actual numerical value of the difference. The transmission power level of the uplink transmitter 220 may then be raised if the measured total energy is less than the desired threshold or may be lowered if the measured total energy is greater than the desired threshold. In this preferred embodiment, the power adjustment value may be implemented as a single bit, thus minimizing bandwidth usage. The UET 216 may simply receive the single-bit adjustment value and then adjust the transmission power level of the uplink transmitter 220 up or down by a predetermined, fixed increment. The increments are preferably equal for the upward and downward adjustments, but need not be equal.

In a third, preferred embodiment of the present invention, the power adjustment processor 208 determines whether the measured total energy is greater or less than the original desired threshold, as in the preferred embodiment above. Two additional thresholds are also established, one above the original threshold and one below the original threshold. The additional thresholds allow for the uplink power to be adjusted in one of four ways: big-step-up, little-step-up, little-step-down, and big-step-down. That is, first, if the measured total energy is below the original threshold and below the lower additional threshold, the transmission power of the uplink transmitter is adjusted upwards by a relatively large predetermined increment. Second, if the measured total energy is below the original threshold and above the lower additional threshold, the transmission power of the uplink transmitter is adjusted upwards by a smaller predetermined increment. Third, if the measured total energy is above the original threshold and below the upper additional threshold, the transmission power of the uplink transmitter is adjusted downwards by a small predetermined increment. Finally, if the measured total energy is above the original threshold and above the upper additional threshold, the transmission power of the uplink transmitter is adjusted downwards by a larger predetermined increment. As above, the increments are preferably equal for both the upward and downward adjustments, but need not be. Also, the larger predetermined increment is preferably about twice the smaller predetermined increment, but other values may be selected to accommodate the needs of specific communication systems. This embodiment may be implemented with a two-bit power adjustment value. Those skilled in the art will recognize that this embodiment may be scaled to larger numbers of thresholds to provide finer gradations of power control. However, implementing larger numbers of thresholds increases the number of bits required for the power adjustment value.

In a fourth embodiment of the present invention, the power adjustment processor determines the value of the measured total energy relative to a plurality of thresholds as occurs in the third embodiment. However, in the fourth embodiment, the transmission power level of the uplink transmitter 220 is not adjusted up or down unless the measured total energy varies by a predetermined amount from the desired threshold. Thus, a lower threshold below the original threshold and an upper threshold above the original threshold are established. If the measured total energy is above the upper threshold, the transmission power of the uplink transmitter is adjusted downwards by a predetermined increment. If the measured total energy is below the lower threshold, the transmission power of the uplink transmitter is adjusted upwards by a predetermined increment. If the measured energy is between the upper and lower thresholds, the power of the uplink transmitter is not adjusted. This embodiment may also be implemented with a two-bit power adjustment value. Those skilled in the art will recognize that the fourth embodiment may be combined with the third embodiment.

In each embodiment, the present invention provides a closed loop procedure for controlling the power level of an uplink signal using synchronization bursts. The energy level measurement is formed using the same correlated variables that are used to develop an early/late indicator from the synchronization bursts for each terminal. The present invention allows each terminal, whether actively engaged in transmitting data bursts or simply maintaining synchronization in a standby condition, to know the transmission power level needed for a transmitted signal to be received by the satellite. Because the desired transmission power level is known, the terminal is able to transmit data at a sufficient power to be received, even at the start of a data transmission. Although a terminal may transmit data in several chanslots, each of which may experience a unique level of interference, the power leveling process provides a means of ensuring that active transmission in each uplink chanslot may be initiated at a level that is neither so high as to induce undue interference in co-channel beams nor so low as to place the transmission's data content at risk of experiencing an excessive cell loss ratio.

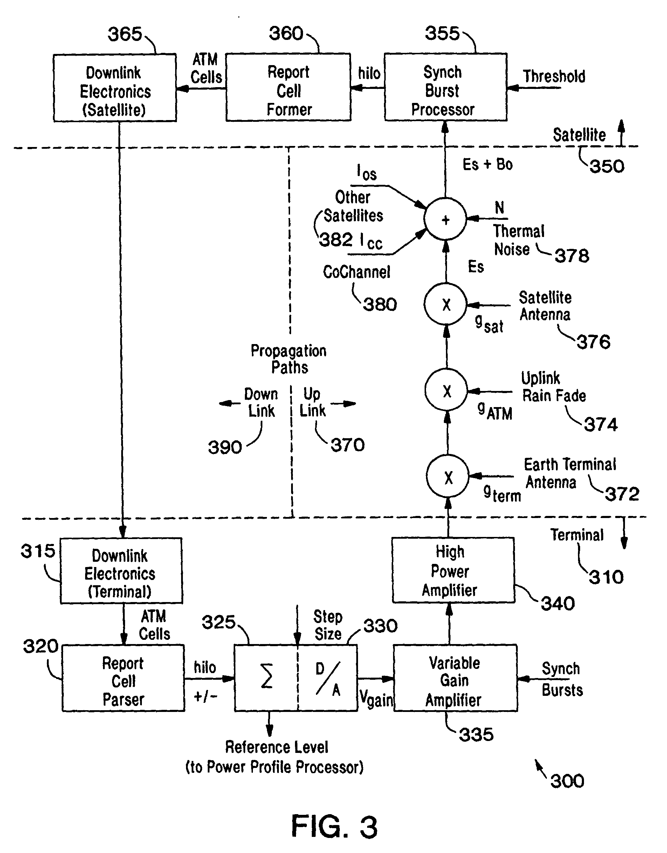

Figure 3 illustrates a power leveling system 300 according to a preferred embodiment of the invention. The power leveling system 300 includes a terminal 310 and a satellite 350. The terminal 310 includes a downlink electronics module 315, a report cell parser 320, an accumulator 325, a digital to analog converter 330, a variable gain amplifier 335, and a high power amplifier 340. The satellite 350 includes a synch burst processor 355, a report cell former 360 and a downlink electronics module 365.

Figure 3 also includes an uplink 370 and a downlink 390. The uplink 370 may be negatively impacted by interference or attenuation as discussed above. For example, a signal transmitted by the terminal 310 to the satellite 350 first experiences a certain gain 372 from the antenna of the earth terminal. The gain of the antenna of the earth terminal may be negatively impacted by, for example, pointing errors as discussed above. The signal may then experience rain fade 374 which may attenuate the signal. The signal then experiences the gain 376 of the satellite antenna, which may also be negatively impacted by pointing errors. The signal may also experience interference from various sources including thermal noise 378, other satellites 382 and from Co-Channel terminals 380 (CCI) as discussed above. In other words, as the synch bursts propagate upwards and reach the satellite 350, they may be subjected to factors that may result in variations in the energy level reaching the satellite's synch burst processor 355. These include the orientation of both the terminal's and the satellite's antennas whose effective gain depends on the precision of aiming. For the satellite antenna, the gain also depends on the location in the beam of the earth terminal. Another variable is the earth's atmosphere which may introduce a significant amount of attenuation due to rain, clouds, or gaseous absorption.

In operation, the terminal 310 periodically sends synchronization bursts to the satellite 350 via the uplink 370. At the terminal, the synchronization bursts are supplied to the variable gain amplifier 335 and then passed to the high power amplifier (HPA) 340 for transmission to the satellite 350. As the synchronization bursts pass through the uplink 370, they may be affected by the factors shown, (i.e., the earth terminal antenna gain 372, the uplink rain fade 374, the satellite antenna gain 376, thermal noise 378, and interference from other satellites 382 and CCI 380)

The synchronization bursts are sent at predetermined intervals regardless of whether the terminal 310 is in standby mode or is actively transmitting data traffic. In order for the synch bursts to be received by the satellite, the synch bursts must be transmitted at a sufficient power level. In operation, the variable gain amplifier 335 scales the amplitude of the signal it passes to the HPA 340. Because the HPA 340 is preferably a non-scalable amplifier, the scaled amplitude passed to the HPA 340 results in a scaled output power from the HPA 340. The output power of the HPA 340 is sufficient so that the synch burst will be received by the satellite 350 at or near a desired power level. Because of the interference present in the uplink 370, the signal received by the synch burst processor 355 from the terminal 310 includes both a desired signal component and an undesired background component.

In a typical satellite system, user terminals may transmit a short synchronization burst to the satellite every 0.75 seconds. The synchronization burst is of N symbols duration where N is typically 64. The signal structure of the burst is a fixed sequence with structure chosen for its ability to provide reliable time-of-arrival indications. Details of a typical synch burst are further disclosed in various related patent applications, including, U.S. Patent application Ser. No._____TRW 205_____, filed _____, entitled "Synchronization Method for a Processing Satellite System", and U.S. Patent application Ser. No._____ TRW 301_____, filed _____, entitled "Uplink Transmission for a Processing Satellite System," the contents of which are incorporated herein by reference.

The processing of the synch bursts at the satellite 350 to determine an early/late indicator for the synch burst and the structure of the synch burst processor 355 are further disclosed in U.S. Patent application Ser. No. _____TRW 241_____, filed _____, entitled "Synchronization Burst Processor", the contents of which is incorporated herein by reference. As set forth in the identified application, the synchronization burst processor (SBP) 355 determines early and late correlated responses $R_E$ and $R_L$. The SBP 355 uses N+1 "odd" samples from the inphase and quadrature components of an received synch burst. Odd samples are samples taken at a half time symbol time offset from the point of convergence of the demodulator's eye diagram. In other words, odd samples are offset by half a symbol time from the usual data symbol rate.

The early correlated response, $R_E$, is determined from 64 odd samples offset by a half symbol time ahead. The late correlated response, $R_L$, is determined from 64 odd samples offset by a half symbol time behind. Thus. because each are offset by half a symbol time, $R_L$ and $R_E$ overlap except as to their earliest and latest samples. Thus, N+1 or 65 odd samples are analyzed to determine $R_L$ and $R_E$. Once $R_L$ and $R_E$ have been determined, the total energy level of the correlated signal may be determined.

Figure 4 illustrates a selected power determination module 400 of the synch burst processor 355 in greater detail, according to a preferred embodiment of the present invention. The power determination module 400 includes an inphase early/late correlator 410, a quadrature early/late correlator 420, a square modulus 430, a power leveling sum and compare module 440, and a timing compare module 450.

In operation, a matched filter (not shown) provides the inphase component of a received synch burst to the inphase early/late correlator 410 and also provides the quadrature component of the received synch burst to the quadrature early/late correlator 420. Both the inphase and quadrature components include N+1 or 65 odd samples. These may be expressed as:

$$\{p_o(n), q_o(n): n = 0 \text{ to } N\}$$

A template t(n) of the synch burst is supplied to both the inphase and quadrature early/late correlators 410, 420 as shown. The inphase and quadrature early/late correlators 410, 420 then correlate the odd samples of the synch burst with the template t(n) to determine an early and late correlation for both the inphase ($P_E$ and $P_L$) and quadrature ($Q_E$ and $Q_L$) components. This may be expressed by the following equations.

$$P_E = \sum_{n=0-63} p_0(n) * t(n) \qquad\qquad P_L = \sum_{n=1-64} p_0(n) * t(n-1)$$

$$Q_E = \sum_{n=0-63} q_0(n) * t(n) \qquad\qquad Q_L = \sum_{n=1-64} q_0(n) * t(n-1)$$

Once the early and late correlations for both the inphase ($P_E$ and $P_L$) and quadrature ($Q_E$ and $Q_L$) components of the odd samples of the synch burst have been formed, the early and late correlations are passed to the square modulus 430. The square modulus determined the total energy level of the early correlation by squaring and summing the inphase and quadrature components of the early correlation. The total energy level of the late correlation is formed in the same way. This may be expressed in the following equations.

$$R_E{}^2 = P_E{}^2 + Q_E{}^2$$

$$R_L{}^2 = P_L{}^2 + Q_L{}^2$$

The total energy values for the early correlation $R_E{}^2$ and the late correlation $R_L{}^2$ are sent to both the timing compare module 450 and the sum and compare module 440. As described in the "Synchronization Burst Processor" application cited above, the timing compare module 450 subtracts $R_E{}^2$ from $R_L{}^2$ to form an early/late indicator. However, the preferred embodiment of the present invention also includes the sum-and-compare module 440.

The sum and compare module 440 adds the early and late correlation energy values to form a total energy value of the received synch burst. This may be expressed as

$$E_{TOT} = R_E{}^2 + R_L{}^2$$

This total energy value is then compared with a threshold energy value to determine a transmission power adjustment.

The total energy value, $E_{TOT}$, incorporates the energies of both the desired signal and the background. Preferably, the synchronization sequence t(n) is chosen such that its autocorrelation at an offset of one symbol or more is small compared with its autocorrelation at zero offset. Assuming the synchronization process has reduced the timing error of the synch bursts to within one symbol time, the expected value of the total energy determined above may be related to the energy per symbol of the received synch burst by the equation:

$$< E_{TOT} >= 2*N*(\lambda*N*E_s + B_o)$$

Where N is the sequence length, $E_s$ is the energy per symbol in the synch burst, Bo is the combined background spectral density including thermal noise and various forms of interference, and $\lambda$ is a constant that depends on the type of filter used to shape the symbols. For the preferred embodiment, N is of length 64, and a rectangular Quadrature Phase Shift Keyed (QPSK) filter is employed which yields $\lambda$=1/4. Consequently, the above equation simplifies to:

$$< E_{TOT} >= 128 * (16 * E_s + B_0)$$

The measured total energy level is thus demonstrated to be strongly dependent upon $E_s$, the energy per symbol of the received synch burst, and weakly dependent on $B_0$, the background power spectral density.

The desired value of $E_s/B_0$ in an operational system may typically be no less than 3 (or 4.8 dB). As an example of the stability of the power leveling process, assigning $E_s$ a value of 3 units and $B_0$ a value of 1 unit yields an expected total energy level of

$$< E_{TOT} >= 128 * (16 * 3 + 1) = 6272$$

The value of $B_0$ contributes only about 2 percent to the value of $<E_{TOT}>$. In order to maintain a desired $E_s$ value of 3 units when $E_s/B_0$ has a value of 4.8 dB, the threshold used in the sum-and-compare module 440 is preferably assigned a value of 6272.

In practice, the value of $B_0$ is random and may vary significantly over time, for instance, due to varying levels of CCI caused by the geographic distribution of interfering terminals within their cells. Allowing the value of $B_0$ to vary in the extreme by a factor of 2, it is readily apparent by substitution and solving the above equation that changes in the level of $B_0$ have little effect on the power leveling process. For example, allowing $B_0$ to vary from a value of 0.5 units to a value of 2 units causes $<E_{TOT}>$ to vary by less than 0.1 dB from the desired value. Thus, the power leveling system responds strongly to factors affecting received synch burst energy such as gain roll-off, pointing error, and atmospheric attenuation, and responds very weakly to changes in the interference level. Because a large increase in interference level actually causes the system to respond by very slightly decreasing the synch burst transmission power, the problem of system runaway is avoided.

As described above, when a synch burst arrives at the SBP 355 with a total energy level higher than the threshold value, a signal may be sent to the user terminal to reduce the transmission power level. Conversely, when a synch burst arrives at the SBP 355 with a total energy level, lower than the threshold value, a signal may be sent to the user terminal to increase the transmission power level.

The threshold level employed by the sum-and-compare module 440 of Figure 4 is independently determined and transmitted to the satellite. Preferably, the threshold is recalibrated at a predetermined, fixed period of approximately one hour. Also, preferably, the re-calibration of the threshold is performed at a Network Control Center (NCC) (not shown) and transmitted by the NCC to the satellite. A system and method for recalibrating the threshold level is further disclosed in U.S. Patent application Ser. No. _____TRW 357_____, filed _____, entitled "Method and Apparatus for Controlling A Transmission Power Threshold of a Satellite Communication System", the contents of which is incorporated herein by reference.

Referring to Figure 4, once the sum and compare module 440 has determined whether the total energy, $E_{TOT}$, is less than or greater than the desired threshold value, the sum-and-compare module 440 may generate a one-bit hi/low indicator as shown. Alternatively, in the preferred embodiment, as described above, the total energy, $E_{TOT}$, is compared to the desired threshold, an upper threshold, and a lower threshold. The sum and compare module than generates a two-bit hihi/hi/lo/lolo indicator. That is, 1) when the total energy is less than the lower threshold, the lolo indicator is sent, 2) when the total energy is greater than the lower threshold but less than the desired threshold a lo indicator is sent, 3) when the total energy is lower than the upper threshold but greater than the desired threshold a hi indicator is sent, and 4) when the total energy is greater than the upper threshold, the hihi indicator is sent. The one- and two-bit hi/lo indicators are specific to the chanslot of the user terminal's synch burst. Preferably, the hi/lo indicator for a terminal is combined with the synch information for that terminal to form a small report for that terminal. Preferably, the hi/lo indicator comprises two bits and the synch information also comprises two bits, thus yielding a four bit (one nibble) report for each terminal.

Referring to Figure 3, the hi/low indicator is then passed to the report cell former 360. The report cell former 360 packages the nibble report including the hi/low indicator for the terminal into a report cell. The report cell may be implemented in the form of an Asynchronous Transfer Mode (ATM) cell. The nibble report including the hi/low indicator may be packaged in the ATM cell with nibble reports including hi/low indicators for other terminals that may be transmitting synch bursts as further described below. The report cell former 360 then packs the nibble reports for each synch burst slot for the current frame into an ATM cell. The report cell former 360 then passes the ATM cell to the downlink electronics module 365 and then to the downlink module 315 of the terminal 310 as described above. The downlink module 315 passes the ATM cell to the report cell parser 320.

The report cell parser 320 unpackages the ATM cell and determines the hi/low indicator from the report nibble for that specific terminal 310. The hi/low indicator is then passed to the accumulator 325. The accumulator 325 then adjusts the power level of the uplink up or down by a predetermined and supplied step size. For example, in the preferred embodiment of a two-bit hi/lo indicator, the uplink power might be adjusted in a 0.1 to 0.25 dB step size for a hi or lo report and in a .25 to .50 dB step size for a lolo or hihi report. That is, the binary hi/lo indicator is converted to bipolar ($\pm 1$) form and added to a digital value stored in memory at the accumulator 325.

The accumulated digital value is converted to analog form by a D/A converter 330. The conversion factor between the digital value and its analog representation is scaled by the step size parameter in the earth terminal. The analog voltage "Vgain" is used to control the gain of the variable gain amplifier 335 in the terminal's 310 transmitter chain. Preferably, the sense of correction of the gain of the variable gain amplifier is opposite to the error reported by the satellite. That is, if "hi" is reported then the amplifier gain is reduced so that a lower power synch burst is transmitted at the next masterframe.

Figure 5 illustrates exemplary ATM report cells 500 according to a preferred embodiment of the present invention. As described above, the preferred embodiment of the present invention employs a four-bit sample nibble 510 for each user terminal. The sample nibble includes a two-bit early/late timing indicator 512 and a two-bit power indicator 514. The preferred embodiment of the ATM report cells 500 relates to each specific synch burst time slot in a specific uplink frame and reports the results for 175 separate (frequency divided) channels that may be accessed concurrently in the time slot. The ATM report cells 500 are standard 53-byte ATM cells including a five-byte header 515 and a forty-eight-byte body 520.

The header 515 includes ATM addressing (VPI and VCI) to all user terminals located in the satellite communication beam. Each UET monitors all ATM cells that arrive in its downlink. When ATM report cells 500 arrive, the ATM report cells 500 are passed to the UET's report cell parser 320 (Figure 3) for parsing.

The body of each ATM report cell 500 is divided into a four-byte subheader 525 and a 44-byte report field 530. The subheader 525 contains fields to identify the cell as a synch burst report and to specify the uplink frame and the time slot to which the report refers. Since the synch burst report extends over two ATM report cells 500, there is also an indicator in the subheader 525 to differentiate the first and second cell of each report.

The report field of each synch burst ATM report cell 500 consists of two nibbles per byte (88 total in the first cell and 87 in the second). The location of each nibble within the report field is associated with a specific channel number. Because each UET knows the frame, slot, and channel in which its most recent synch burst was transmitted, the UET is able to identify the ATM report cells 500 that are relevant to it by comparing the terminal's frame and slot number to that of the ATM report cell. By comparing the terminal's channel to the ATM report cell 500, the terminal is also able to easily locate the nibble in the ATM report cell that pertains to the terminal's particular channel.

Thus, the preferred embodiment of the present invention enables each terminal in the system, regardless of whether it is actively transmitting traffic bursts or simply maintaining synchronization while in a standby condition, to transmit at a power level that produces a received level at the satellite's synch burst processor which is close to a predetermined threshold value. The preferred embodiment is efficient in its usage of satellite processing resources and also in any overhead requirements that it imposes on the communication resources between the satellite and the terminal. The preferred embodiment is also relatively insensitive to fluctuations in the level of the unwanted background that it experiences in the satellite receiving electronics.

The present invention thus yields the ability to accurately maintain uplink power accurately at a threshold level. In addition, the uplink power control may be fully integrated with the uplink timing reference control as described above. Also, no additional signaling between the terminal and the satellite is required because the present invention employs the synch bursts which are already sent to the satellite. Additionally, the preferred embodiment make efficient use of the synchronization processes and adds minimal new hardware to the satellite.

Additionally, the preferred embodiment is unconditionally stable. System runaway is prevented because, as discussed above, increases in background level result in the terminals lowering, rather than raising, their uplink transmission power. Also, the threshold reference level is easily scalable by uploading a new threshold level to the sum-and-compare module 440 of the satellite. The present invention thus results in reduced interference between UETs within the system as well as between separate communication systems. The reduced interference permits reference levels to be held not far above theoretical minima, resulting in increased reserve margin at the user terminals, for a given HPA level. The reduction in reference level may reduce terminal costs by allowing the use of lower rated HPAs.

Also, the present invention permits the reference power level to be maintained by standby, as well as active, user terminals. Thus, UETs which transmit data intermittently, rather than continuously, or UETs that are first establishing communication, may transmit at a certain desired threshold level. By regulating UET's initial uplink power level, the present invention may reduce CCI.

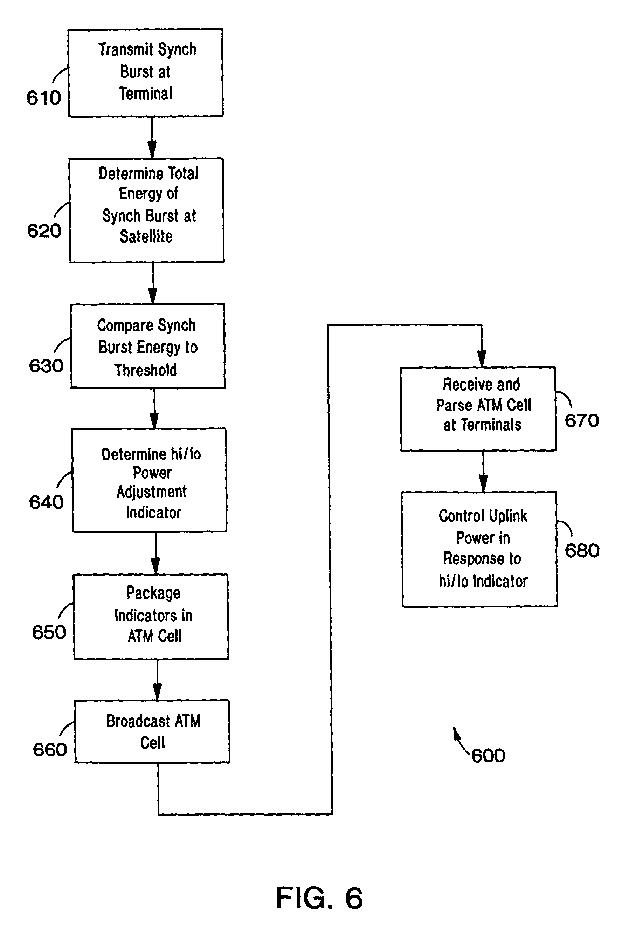

Figure 6 illustrates a flow chart 600 according to a preferred embodiment of the present invention. First, at step 610, the terminal transmits a synchronization burst. Next, at step 620, the synch burst is received at the satellite and the total energy of the synch burst is determined. Then, at step 630, the total energy of the synch burst is compared to a threshold energy level. At step 640, a hi/lo power adjustment indicator is determined based on the comparison of the total energy of the synch bust to the threshold energy level. At step 650, the power adjustment indicators are packaged into ATM report cells. Next, at step 660, the ATM report cells are broadcast to the terminals. Then, at step 670, the ATM report cell is received and parsed, at the terminal, to determine the hi/lo power adjustment indicator for that terminal. Finally, at step 680, the uplink transmission power is controlled in response to the hi/lo power adjustment indicator.

While particular elements, embodiments and applications of the present invention have been shown and described, it is understood that the invention is not limited thereto since modifications may be made by those skilled in the art, particularly in light of the foregoing teaching. It is therefore contemplated by the appended claims to cover such modifications and incorporate those features which come within the spirit and scope of the invention.

## Claims

1. A satellite communication system including an uplink power control system comprising:

   an uplink transmitter, in a terminal, transmitting an uplink signal at an uplink power level to a satellite;
   a power adjustment processor, in a satellite receiving said uplink signal, generating a power adjustment indicator based upon a comparison of the total energy of said uplink signal received by said satellite with a predetermined threshold energy; and
   a variable gain amplifier, in said terminal. controlling said uplink power level of said uplink transmitter in response to said power adjustment indicator.

2. The system of claim 1 wherein said power adjustment indicator is a single-bit adjustment value.

3. The system of claim 1 wherein said uplink power level is changed by a fixed increment in response to said power adjustment indicator.

4. The system of claim 1 wherein said power adjustment indicator is a plurality-bit adjustment value.

5. The system of claim 1 wherein said uplink power level is changed by one of a plurality of fixed increments, based on the magnitude of the difference between the total energy of the uplink signal and the threshold energy, in response to said power adjustment indicator.

6. The system of claim 1 wherein said uplink power level is changed by a fixed increment or left unchanged, based on the magnitude of the difference between the total energy of the uplink signal and the threshold energy, in response to said power adjustment indicator.

7. The system of claim 1 wherein said uplink signal is a synchronization signal.

8. The system of claim 7 further including a synchronization processor, in said satellite, for determining the total energy of said uplink signal.

9. The system of claim 1 further including a report cell former, in said satellite, forming said power adjustment indicator into a power adjustment report.

10. The system of claim 9 wherein the power adjustment report is implemented as at least one Asynchronous Transfer Mode (ATM) cell.

11. The system of claim 9 further including a report cell parser, in said terminal, for parsing said at least one power adjustment report cell to extract said power adjustment indicator for said terminal.

**12.** A user earth terminal (UET) in a satellite system comprising:

an uplink transmitter transmitting an uplink signal at an uplink power level;
a receiver receiving a power adjustment signal identifying the energy level of said uplink signal received at a satellite with regard to a predetermined threshold energy level; and
a variable gain amplifier controlling said uplink power level in response to said power adjustment signal.

**13.** The UET of claim 12 wherein said uplink power level is changed by a fixed increment in response to said power adjustment signal.

**14.** The UET of claim 12 wherein said uplink power level is changed by one of a plurality of fixed increments, based on the magnitude of the difference between said energy level of said uplink signal received at said satellite and said predetermined threshold energy level, in response to said power adjustment signal.

**15.** The UET of claim 12 wherein said uplink power level is changed by a fixed increment or left unchanged, based on the magnitude of the difference between said uplink energy level received at said satellite and said predetermined threshold energy level, in response to said power adjustment signal.

**16.** The UET of claim 12 further including a report cell parser, wherein said power adjustment signal is contained within at least one prior adjustment report, said report cell parser parsing said at least one power adjustment report cell to extract said power adjustment indicator for said UET.

**17.** A method for controlling an uplink power level of an uplink transmitter in a terminal in a satellite communication system comprising the steps of:

transmitting an uplink signal at an uplink power level from a terminal to a satellite;
receiving said uplink signal at said satellite;
determining the total energy of said uplink signal received by said satellite;
comparing the total energy level of said uplink signal with a predetermined threshold energy level;
generating a power adjustment indicator based upon said comparing step;
transmitting said power adjustment signal to said terminal; and
controlling said uplink power level of said terminal in response to said power adjustment indicator.

**18.** The method of claim 17 wherein said generating step includes the step of generating a single-bit power adjustment indicator.

**19.** The method of claim 17 wherein said controlling step includes the step of changing said uplink power level by a fixed increment.

**20.** The method of claim 17 wherein said generating step includes the step of generating a plurality-bit power adjustment indicator.

**21.** The method of claim 17 wherein said controlling step includes the step of changing said uplink power level by one of a plurality of fixed increments, based on the magnitude of the difference between the total power of the uplink signal and the threshold power, in response to said power adjustment indicator.

**22.** The method of claim 17 wherein said controlling step includes the step of changing said uplink power level by a fixed increment or leaving said uplink power level unchanged, based on the magnitude of the difference between the total energy level of the uplink signal and the threshold energy level, in response to said power adjustment indicator.

**23.** The method of claim 17 wherein said transmitting step includes the step of transmitting a synchronization signal as said uplink signal.

**24.** The method of claim 17 wherein said determining step included the step of determining the total energy level of said uplink signal using a synchronization processor.

**25.** The method of claim 17 further including the step of forming said power adjustment indicator into at least one power adjustment report cell.

26. The method of claim 25 wherein the power adjustment report cell is implemented as an ATM cell.

27. The method of claim 25 further including the step of parsing said at least one power adjustment report cell to extract said power adjustment indicator for said terminal.

28. A satellite communication link embodied in a carrier wave propagating in free space comprising:

an uplink signal having an energy level;
a downlink signal having a power adjustment signal identifying the energy level of said uplink signal at a satellite relative to a predetermined threshold energy level.

FIG. 1

200

| 204 | 206 | 208 | 210 |
|---|---|---|---|
| Uplink Receiver | Synchronization Processor | Power Adjustment Processor | Downlink Transmitter |

214
Satellite

202

212

216

| | |
|---|---|
| Uplink Transmitter | Downlink Receiver |

220

230

Terminal

# FIG. 2

FIG. 3

FIG. 4

8 bits

VPCI to all
UETs in Beam

HEC

5
byte
header
515

Indicates Synch
Burst Report Cell
1 of 2 for UL
Frame N, Slot S

4
byte
subheader
525

| 1 | CH1 | CH2 |

48
byte
body
520

44
byte
report
field
530

Nibbles
report
specific
channel

| N | CH 2N-1 | CH 2N |

88
Nibbles

| 44 | CH87 | CH 88 |

512

Timing indicators
early/late/not seen

8 bits

VPCI to all
UETs in Beam

HEC

Note:
Report describes
synch burst
results for all
channels in a
given slot of a
given frame.

Indicates Synch
Burst Report Cell
2 of 2 for UL
Frame N, Slot S

Subheader
525

| CH89 | CH90 | 1 |

87
Nibble
report
field
530

| CH 88+2M-1 | CH 88+2M | M |

| CH175 | :::::::: | 44 |

514

Not used

Power indicators
hihi/hi/lo/lolo

4
Bits

Sample
Nibble
510

500

FIG. 5

FIG. 6